# EUROPEAN PATENT SPECIFICATION

(11) **EP 0 993 768 B1**
(45) Date of publication and mention of the grant of the patent: **20.08.2003**
(21) Application number: 99203213.6
(22) Date of filing: 01.10.1999
(51) Int. Cl.: A01J 5/017, A01J 5/007

(54) **A method of automatically milking animals and a fully automatic milking machine provided with a milking robot, said milking machine being suitable for performing same**
Verfahren zum automatischen Melken von Tieren und eine vollautomatische Melkmaschine mit einem Melkroboter, die geeignet ist dieses Verfahren auszuführen
Méthode de traite automatique d'animaux et machine à traire entièrement automatique équipée d'un robot de traite, ladite machine convenant pour la mise en oeuvre de ladite méthode

(30) Priority: 15.10.1998 NL 1010323
(43) Date of publication of application: 19.04.2000
(73) Proprietor: MAASLAND N.V., 3155 PD Maasland (NL)
(72) Inventor: van der Lely, Olaf, 6300 Zug (CH); de Groen, Franciscus Johannes Adrianus, 3225 CB Hellevoetsluis (NL); Pols, Ronald Maarten, Waltham on the Wolds LE14 4AH (GB)
(74) Representative: Corten, Maurice Jean F.M.

(56) References cited:
- EP-A- 0 091 892
- EP-A- 0 728 413
- EP-A- 0 792 579
- WO-A-95/35028
- WO-A-96/19915
- WO-A-97/13403
- US-A- 3 783 837
- US-A- 5 469 808

## Description

The invention relates to a method as claimed in the preamble of claim 1. The invention further relates to a fully automatic milking machine provided with a milking robot, which milking machine is suitable for performing said method.

Such a method is known. When, in such a method, an animal wishes to visit the milking parlour, there is decided on the basis of an admittance criterion (for admitting the animal to the milking parlour) and/or a milking criterion (for connecting the teat cups of the milking robot to the animal's udder) whether or not the animal should be milked. When this criterion is not met, the animal is not admitted to the milking parlour or is removed therefrom.

The European patent EP-A-0 091 892 discloses a system in which a cow is only milked in the milking parlour when a previously determined period of time has elapsed since her last milking. From the international patent WO-A-95/35028 it is known to use as a milking criterion the number of milkings of other animals since the previous milking of the relevant animal: the animal is only milked when this number at least equals a specific minimum number which may vary per animal. When the milking criterion has not been met, the animal is chased away from the milking parlour. In other known systems there is already checked for each animal at the entrance of the milking parlour whether the relevant animal was still milked at a too recent point of time. The animal is only admitted to the milking parlour when the admittance criterion being applied has been met.

The known methods have various disadvantages. Animals that, for any reason whatsoever, wish to visit the milking parlour often and are regularly not admitted to the milking parlour or are quickly removed therefrom, may become frustrated. Moreover, when applying a criterion, not only an animal identification system is necessary, but also a system of recording a number of data relevant to the criterion (such as, for example, for each animal the point of time at which the last milking took place).

The invention aims at providing an improved method. According to the invention, this is achieved by means of the measures mentioned in the characterizing part of claim 1.

The invention is based on the insight that the fact of each time being cleaned and/or massaged and/or subjected to connection of the teat cups of the milking robot to the udder will be experienced to an increasing extent as unpleasant by animals visiting the milking parlour often, so that, in the long run, they will change their behaviour and visit the milking parlour less frequently. Contrary to the opinion, prevailing among experts and generally accepted, that, when a milking robot is used, it is absolutely necessary to prevent the animals, with the aid of a criterion, from being milked too frequently, it has now appeared that specifically a frequent and unlimited admission of the animals to the milking parlour, including cleaning and/or massaging and/or milking said animals, leads to excellent results. The attraction exerted by the milking robot on the animals is as it were weakened by the repeated, in the long run unpleasant experience of each time being cleaned and/or massaged and/or subjected to connection of the teat cups of the milking robot to the udder. In this way there is attained after some time an equilibrium in which the number of visits to the milking parlour per animal is not too high.

So it is no longer necessary to control the admittance to the milking parlour by means of an admittance criterion or to control milking or non-milking of an animal by means of a milking criterion. The choice of visiting the milking parlour and being milked lies completely with the animals, which renders the method highly animal-friendly. In the long run, the animals will not visit the milking parlour too often of their free will. Furthermore it is no longer necessary (although it may be desirable for other purposes) to implement an animal identification system and a system of recording animal data in connection with a criterion to be used.

When an animal (a cow, for example) visits the milking parlour, it will be admitted at all times, unless, of course, the milking robot is already occupied by an other animal or is just in a cleaning or maintenance phase. Then, at each visit of an animal to the milking parlour it is tried to connect the teat cups of the milking robot to the animal's udder and to milk the animal. After a specific number of unsuccessful attempts to connect the teat cups of the milking robot to the animal's udder, the door of the milking parlour is opened, so that the animal can leave the milking parlour or (if necessary) the animal is chased away from the milking parlour in a manner known per se.

The animals are preferably lured to the milking parlour by means of at least one lure means. As a lure means there may be used for example food and/or drink. In this situation, at each visit of an animal to the milking parlour, there is supplied an amount of feed and/or drink to the animal. It is also possible to use as a lure means an aromatic substance which is pleasant or attractive to the relevant animals, such as cows. Further it is possible to use as lure means visual and/or acoustic means (light, colours, pictures, pleasant sounds, music, etc.). The design of the milking parlour (a resilient mat, an elevation for the forelegs, etc.) may also serve as a lure means. The use of lure means has the advantage of offering an additional guarantee that the animals will visit the milking parlour sufficiently often, in spite of the fact that in said milking parlour each time a cleaning and/or massage is effected and/or the teat cups of the milking robot are connected to the udder.

Also in the situation of an animal that has just been milked and returns to the milking robot too quickly, after the teat cups have been connected to the teats the milk flow of one or more teats is measured with the aid of one or more milk flow sensors, If the milk flow appears to be below a possibly adjustable threshold, the relevant teat cups/cups is/are disconnected immediately or is/are only disconnected after a possibly adjustable period of time. Especially in the situation of animals that appear often to return to the robot too quickly, there may be decided to continue milking somewhat longer in order to discourage them to return to the milking robot too quickly. Further it is possible to alter the milk vacuum level in order to discourage the animal even more.

The fully automatic milking machine provided with a milking robot according to the invention admits any animal to the milking parlour at any point of time, provided that the milking parlour is ready for milking an animal (i.e. is not already occupied or is not in a cleaning or maintenance phase). At each visit of an animal to the milking parlour the milking robot cleans and/or massages the animal's udder and/or tries to connect the teat cups to the animal's udder and to milk the animal.

## Claims

1. A method of automatically milking animals that are able to move freely in an area intended therefor and to visit individually a milking parlour comprising a fully automatic milking machine provided with a milking robot, **characterized in that** any animal is admitted to the milking parlour at any point of time when the milking parlour is ready for milking an animal and **in that** at each visit of an animal to the milking parlour it is tried to connect the teat cups of the milking robot to the animal's udder and to milk the animal.

2. A method as claimed in claim 1, **characterized in that** the animals are lured to the milking parlour with the aid of at least one lure means.

3. A method as claimed in claim 2, **characterized in that** there is used feed as a lure means and at each visit of an animal to the milking parlour there is provided an amount of feed to the animal.

4. A method as claimed in any one of claims 2 and 3, **characterized in that** there is used drink as a lure means and at each visit of an animal to the milking parlour there is provided an amount of drink to the animal.

5. A method as claimed in any one of claims 2 to 4, **characterized in that** an aromatic substance is used as a lure means.

6. A method as claimed in any one of claims 2 to 5, **characterized in that** visual and/or acoustic means are used as lure means.

7. A method as claimed in any one of claims 2 to 6, **characterized in that** the design of the milking parlour (such as a resilient mat and/or an elevation for the forelegs) is used as a lure means.

8. A method as claimed in any one of claims 1 to 7, **characterized in that** after milking the animal or after a specific number of unsuccessful attempts to connect the teat cups of the milking robot to the animal's udder, the animal is enabled to leave the milking parlour or is chased away therefrom.

9. A method as claimed in any one of claims 1 to 8, **characterized in that**, after one or more teat cups have been connected to the teats of an animal to be milked, the milk flow of one or more teats is measured with the aid of one or more milk flow sensors and compared with a possibly adjustable threshold value for this milk flow, and if it appears that an insufficient quantity of milk is being yielded, the teat cup/cups is/are disconnected immediately or after an adjustable period of time.

10. A method as claimed in claim 9, **characterized in that** if it appears that an insufficient quantity of milk is being yielded, the milk vacuum level is altered.

11. A fully automatic milking machine provided with a milking robot, **characterized in that** said milking machine is suitable for performing the method as claimed in any one of claims 1 to 10.

## Patentansprüche

1. Verfahren zum automatischen Melken von Tieren, die sich in einem hierfür vorgesehenen Bereich frei bewegen und einzeln einen Melkstand aufsuchen können, der eine vollautomatische Melkmaschine mit einem Melkroboter umfaßt,
**dadurch gekennzeichnet, daß** jedes Tier zu jedem beliebigen Zeitpunkt zum Melkstand zugelassen wird, wenn der Melkstand zum Melken eines Tieres bereit ist, und daß bei jedem Aufsuchen des Melkstandes durch ein Tier versucht wird, die Zitzenbecher des Melkroboters an das Euter des Tieres anzuschließen und das Tier zu melken.

2. Verfahren nach Anspruch 1,
**dadurch gekennzeichnet, daß** die Tiere mit Hilfe mindestens eines Lockmittels in den Melkstand gelockt werden.

3. Verfahren nach Anspruch 2,
**dadurch gekennzeichnet, daß** als Lockmittel Futter verwendet wird und bei jedem Aufsuchen des Melkstandes durch ein Tier eine Menge an Futter an das Tier ausgegeben wird.

4. Verfahren nach einem der Ansprüche 2 und 3,
**dadurch gekennzeichnet, daß** als Lockmittel Trinkflüssigkeit verwendet wird und bei jedem Aufsuchen des Melkstandes durch ein Tier eine Menge an Trinkflüssigkeit an das Tier ausgegeben wird.

5. Verfahren nach einem der Ansprüche 2 bis 4,
**dadurch gekennzeichnet, daß** als Lockmittel eine aromatische Substanz verwendet wird.

6. Verfahren nach einem der Ansprüche 2 bis 5,
**dadurch gekennzeichnet, daß** als Lockmittel optische und/oder akustische Mittel verwendet werden.

7. Verfahren nach einem der Ansprüche 2 bis 6,
**dadurch gekennzeichnet, daß** als Lockmittel die Ausgestaltung des Melkstandes (wie z. B. ein elastische Matte und/oder eine Erhöhung für die Vorderbeine) verwendet wird.

8. Verfahren nach einem der Ansprüche 1 bis 7,
**dadurch gekennzeichnet, daß** nach dem Melken des Tieres oder nach einer bestimmten Anzahl erfolgloser Versuche, die Zitzenbecher des Melkroboters an das Euter des Tieres anzuschließen, das Tier den Melkstand verlassen kann oder aus diesem herausgetrieben wird.

9. Verfahren nach einem der Ansprüche 1 bis 8,
**dadurch gekennzeichnet, daß** nach dem Anschließen eines oder mehrerer Zitzenbecher an die Zitzen eines zu melkenden Tieres der Milchfluß aus einer oder mehreren Zitzen mit Hilfe eines oder mehrerer Milchflußsensoren gemessen und mit einem eventuell einstellbaren Grenzwert für diesen Milchfluß verglichen wird und der/die Zitzenbecher unverzüglich oder nach einem einstellbaren Zeitraum abgenommen wird/werden, wenn sich herausstellt, daß eine nicht ausreichende Milchmenge gewonnen wird.

10. Verfahren nach Anspruch 9,
**dadurch gekennzeichnet, daß** das Melkvakuum verändert wird, wenn sich herausstellt, daß eine nicht ausreichende Milchmenge gewonnen wird.

11. Vollautomatische Melkmaschine mit einem Melkroboter,
**dadurch gekennzeichnet, daß** die Melkmaschine zur Durchführung des Verfahrens nach einem der Ansprüche 1 bis 10 geeignet ist.

## Revendications

1. Procédé de traite automatique d'animaux qui ont la possibilité de se déplacer librement dans un espace prévu à cette fin et de se rendre individuellement dans une salle de traite comprenant une machine à traire entièrement automatique équipée d'un robot de traite, **caractérisé en ce que** tout animal est admis dans la salle de traite à toute heure lorsque la salle de traite est prête pour la traite d'un animal et **en ce qu'**à chaque visite d'un animal dans la salle de traite on tente de relier les gobelets-trayeurs du robot de traite aux mamelles de l'animal et de traire l'animal.

2. Procédé tel que défini dans la revendication 1,
caractérisé en que les animaux sont attirés dans la salle de traite à l'aide d'au moins un moyen d'attrait.

3. Procédé tel que défini dans la revendication 2,
**caractérisé en ce que** de l'alimentation est utilisée comme moyen d'attrait et à chaque visite d'un animal dans la salle de traite il est fourni une quantité d'alimentation à l'animal.

4. Procédé tel que défini dans l'une quelconque des revendications 2 et 3, **caractérisé en ce que** de la boisson est utilisée comme moyen d'attrait et à chaque visite d'un animal dans la salle de traite il est fourni une quantité de boisson à l'animal.

5. Procédé tel que défini dans l'une quelconque des revendications 2 à 4, caractérisé en qu'une substance aromatique est utilisée comme moyen d'attrait.

6. Procédé tel que défini dans l'une quelconque des revendications 2 à 5, caractérisé en qu'un moyen visuel et/ou acoustique est utilisé comme moyen d'attrait.

7. Procédé tel que défini dans l'une quelconque des revendications 2 à 6, caractérisé en que la conception de la salle de traite (tel qu'une paillasse élastique et/ou une élévation pour les pattes antérieures) est utilisée comme moyen d'attrait.

8. Procédé tel que défini dans l'une quelconque des revendications 1 à 7, **caractérisé en ce qu'**après la traite de l'animal ou après un nombre spécifique de tentatives ayant échoué pour relier les gobelets-trayeurs du robot de traite aux mamelles de l'animal, l'animal peut quitter la salle de traite ou en est chassé.

9. Procédé tel que défini dans l'une quelconque des revendications 1 à 8, **caractérisé en ce que**, une fois qu'un ou plusieurs gobelet-trayeur(s) est (sont) relié(s) aux tétines d'un animal à traire, le débit de lait de l'une ou plusieurs tétines est mesuré à l'aide d'un ou plusieurs capteurs de débit de lait et comparé à une valeur seuil éventuellement ajustable pour ce débit de lait, et s'il apparaît qu'une quantité insuffisante de lait est produite, le(s) gobelet(s)-trayeur(s) est(sont) déconnecté(s) immédiatement ou après un délai ajustable.

10. Procédé tel que défini dans la revendication 9, caractérisé en que s'il apparaît qu'une quantité insuffisante de lait est produite, le niveau de vide de traite est modifié.

11. Machine à traire entièrement automatique équipée d'un robot de traite, **caractérisé en ce que** ladite machine à traire convient pour mettre en oeuvre le procédé tel que défini dans l'une quelconque des revendications 1 à 10.
